# EUROPEAN PATENT APPLICATION

(11) **EP 3 678 253 A1**
(43) Date of publication of application: **08.07.2020**
(21) Application number: 17933481.8
(22) Date of filing: 01.12.2017
(51) Int. Cl.: H01M 10/0587

(54) **COILED BATTERY CELL**

(71) Applicant: Ningde Amperex Technology Limited, Ningde, Fujian 352100 (CN)
(72) Inventor: ZENG, Qiao, Ningde Fujian 352100 (CN); XIAO, LiangZhen, Ningde Fujian 352100 (CN); WANG, KeFei, Ningde Fujian 352100 (CN)
(74) Representative: CMS Cameron McKenna Nabarro Olswang LLP
(86) International application number: PCT/CN2017/114271
(87) International publication number: WO 2019/104720

(57) **Abstract**

A coiled battery cell, comprises: a first electrode plate, the first electrode plate comprising a first active material layer, the first active material layer completely covering two surfaces of the first electrode plate; an outermost circle of the coiled battery cell is a separator, the separator in the outermost circle is adjacent to the first electrode plate. A battery comprising the coiled battery cell is further disclosed. The purpose is to at least reduce the risk of short circuit as a result of tearing or breaking of the aluminum foil in the outer layer when the cell is dropped.

## Description

### FIELD

The disclosure relates to a coiled battery cell.

### BACKGROUND

Li-ion batteries are widely used in consumer electronics, but due to the characteristics of the Li-ion batteries, they have certain safety risks. A coiled battery cell usually includes a positive electrode single-sided area and a negative electrode single-sided area. An outer layer of the coiled battery cell structure ends with an aluminum foil, and there is a risk of short circuit caused by tearing or breaking the outer aluminum foil if the coiled battery cell is dropped. For example, when a consumer electronic is dropped, the outer aluminum foil can be easily torn, which may cause an internal short circuit of the battery of the consumer electronic. Thus, there is need to provide a cell structure capable of solving the above problems.

### SUMMARY

In view of the problems in the prior art, the object of the present disclosure is to provide a coiled battery cell to at least reduce the risk of short circuit caused by tearing or breaking the aluminum foil when the coiled battery cell is dropped.

The technical solution of the present disclosure is implemented as follows:

In one embodiment of the present disclosure, a coiled battery cell is provided, comprising: a first electrode plate, the first electrode plate comprising two surfaces coated with a first active material layer, the first active material layer completely covering the two surfaces of the first electrode plate. An outermost circle of the coiled battery cell is a separator tail, such separator at the outermost circle being adjacent to the first electrode plate.

According to one embodiment of the present disclosure, the coiled battery cell further comprises: a second electrode plate, the second electrode plate comprises a second active material layer, the second active material layer completely covers two surfaces of the second electrode plate.

According to one embodiment of the present disclosure, a plurality of first electrode tabs protrude from the first electrode plate, and a plurality of second electrode tabs protrude from the second electrode plate. The separator comprises a starting section extending along a width direction of the coiled battery cell, a winding section extending from the starting section, and a tail section forming the separator tail.

According to one embodiment of the present disclosure, the tail section of the separator is not overlapped with a tail section of the first electrode plate in a thickness direction of the coiled battery cell.

According to one embodiment of the present disclosure, in the thickness direction of the coiled battery cell, the tail section of the first electrode plate and a tail section of the second electrode plate are located on a same side of the starting section.

According to one embodiment, the plurality of first electrode tabs and the plurality of second electrode tabs are all located on a top of the coiled battery cell, or the plurality of first electrode tabs and the plurality of second electrode tabs may both be located on a bottom of the coiled battery cell.

According to one embodiment, the plurality of first electrode tabs are located on the top of the coiled battery cell and the plurality of second electrode tabs are located on the bottom of the coiled battery cell, or the plurality of first electrode tabs may be located on the bottom of the coiled battery cell and the plurality of second electrode tabs may be located on the top of the coiled battery cell.

According to one embodiment of the present disclosure, in the thickness direction of the coiled battery cell, the plurality of first electrode tabs and the plurality of second electrode tabs are located on a same side of the starting section.

According to one embodiment of the present disclosure, in the thickness direction of the coiled battery cell, the plurality of first electrode tabs are located on two sides of the starting section, and the plurality of second electrode tabs are located on two sides of the starting section.

According to one embodiment of the present disclosure, a battery is provided, comprising the coiled battery cell as described above and a packaging film wrapping the coiled battery cell.

The features of implementation according to the present disclosure are as follows:

The coiled battery cell and the battery of the present disclosure ends with the separator, having a high friction force against a packaging foil, which may absorb some of the impact force when the coiled battery cell is dropped, Furthermore, both surfaces of the first electrode plate adjacent to the separator in the outermost circle are coated with active material layer, which has a higher strength than a single layer of aluminum foil, thereby reducing the risk of short circuit as a result of tearing or breaking of the aluminum foil.

### BRIEF DESCRIPTION OF THE DRAWINGS

FIG. 1 is a schematic structural view of a coiled battery cell in prior art.
FIG. 2 is a cross-sectional view of an embodiment of a coiled battery cell according to the present disclosure.
FIG. 3a is a top view of a first electrode plate in FIG. 2.
FIG. 3b is a cross-sectional view of a first electrode plate in FIG. 2.
FIG. 4a is a top view of a second electrode plate in FIG. 2.
FIG. 4b is a cross-sectional view of a second electrode plate in FIG. 2.
FIG. 5 is a cross-sectional view of an embodiment of a coiled battery cell according to the present disclosure.
FIG. 6 is a cross-sectional view of an embodiment of a coiled battery cell according to the present disclosure.
FIG. 7 is a cross-sectional view of an embodiment of a coiled battery cell according to the present disclosure.
FIG. 8 is a side view of an embodiment of a coiled battery cell according to the present disclosure.
FIG. 9 is a side view of an embodiment of a coiled battery cell according to the present disclosure.

### DETAILED DESCRIPTION

Implementations of the coiled battery cell of the disclosure will now be described with reference to the drawings. It may be understood, the corresponding exemplary embodiments in the following description and the drawings may be combined with each other to form other implementations not described below, and some elements can be omitted in different embodiments. In another word, the following description does not limit the present disclosure.

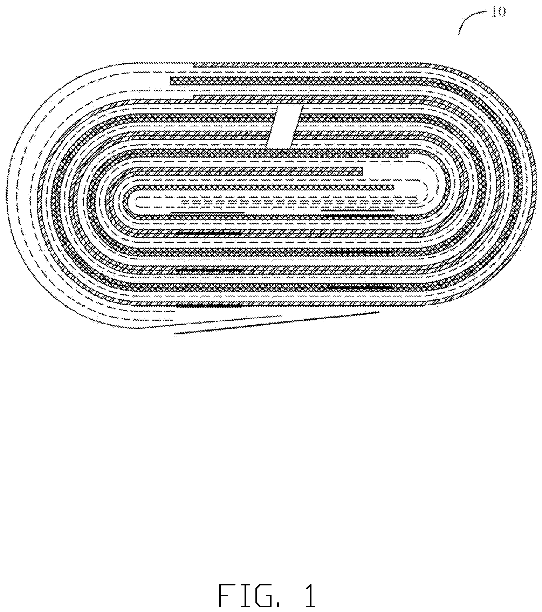

As shown in FIG. 1, a positive electrode and a negative electrode of a coiled battery cell 10 in prior art both include a single-sided area coated with active material layer on one side. The outer layer of the coiled battery cell 10 ends with an aluminum foil, and when the battery is dropped there is a risk of short circuit occurring because of tearing or breaking of the aluminum foil.

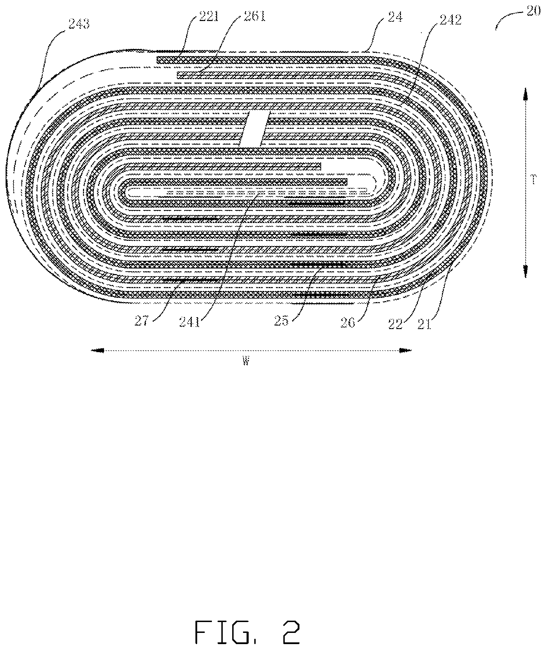

As shown in FIG. 2, an embodiment of the present disclosure provides a coiled battery cell 20, the coiled battery cell 20 includes a first electrode plate 22. The first electrode plate 22 includes a first active material layer, the first active material layer completely covers two surfaces of the first electrode plate 22; an outermost circle of the coiled battery cell 20 is a separator 24, the separator 24 in the outermost circle is adjacent to the first electrode plate 22.

The coiled battery cell of the present disclosure ends with the separator 24, having a high friction force against a packaging foil, which may absorb some of the impact force when the coiled battery cell is dropped. Furthermore, both surfaces of the first electrode plate 22 adjacent to the separator 24 in the outermost circle are coated with active material layer, which has a higher strength than a single layer of aluminum foil, thereby reducing the risk of short circuit as a result of tearing or breaking of the aluminum foil.

As shown in FIG. 2, the coiled battery cell 20 further includes a second electrode plate 26. The second electrode plate 26 includes a second active material layer 23, the second active material layer 23 completely covers two surfaces of the second electrode plate 26. In other words, the active material layers completely cover the two surfaces of the first electrode plate 22 and the two surfaces of the second electrode plate 26, so it can be continuously coated in production, which reduces production cost, and avoids a risk of rolling caused by using an electrode plate with the single-sided area.

It should be understood, although an embodiment in which the coiled battery cell is wound clockwise is shown in FIG. 2, the coiled battery cell 20 may also be formed by counterclockwise winding of the stacked first electrode plate 22, the separator 24, and the second electrode plate 26. It should also be understood, when the first electrode plate 22 is a positive electrode plate, the second electrode plate 26 is a negative electrode plate, or when the first electrode plate 22 is a negative electrode plate, the second electrode plate 26 is a positive electrode plate.

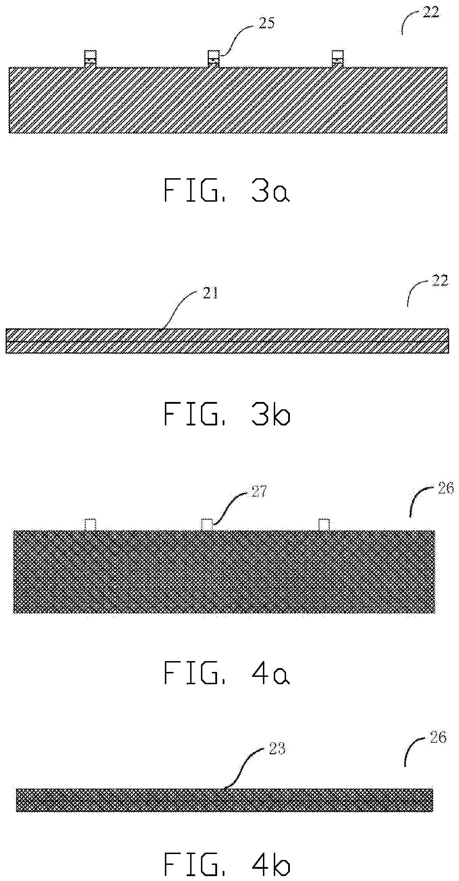

FIG. 3a shows a top view the first electrode plate 22 of an embodiment of the present disclosure. A plurality of first electrode tabs 25 protrude from the first electrode plate 22. The specific positions where the plurality of first electrode tabs 25 protrude may be determined according to the specific use situation, and are not limited to those in the embodiment shown in the drawings. FIG. 3b shows a cross-sectional view of the first electrode plate 22 of an embodiment of the present disclosure, the first electrode plate 22 includes the first active material layer 21, the first active material layer 21 completely covers the two surfaces of the first electrode plate 22.

FIG. 4a shows a top view of the second electrode plate 26 of an embodiment of the present disclosure. A plurality of second electrode tabs 27 protrude from the second electrode plate 26. The specific positions where the plurality of second electrode tabs 27 may protrude may be determined according to the specific use situation, and are not limited to those in the embodiment shown in the drawings. FIG. 4b shows a cross-sectional view of the second electrode plate 26 of an embodiment of the present disclosure, the second electrode plate 26 includes the second active material layer 23, the second active material layer 23 completely covers the two surfaces of the second electrode plate 26.

Referring to FIG. 2, the separator 24 includes a starting section 241 extending along a width direction W of the coiled battery cell, a winding section 242 extending from the starting section, and a tail section 243 forming a separator tail. The stacked first electrode plate 22, the separator 24, and the second electrode plate 26 are wound from the starting section 241 of the separator. The winding section 242 is bent at one end of the coiled battery cell 20, extends to other end thereof, is bent again, and is finally closed by the tail section in the outermost circle. The starting section 241 of the separator refers to the section from the starting end of the separator 24 to the first bend of the separator 24 and the tail section 243 of the separator refers to the section from the tail end of the separator 24 to the last bend of the separator 24. The winding section 242 of the separator refers to the section between the starting section 241 and the tail section 243. The width direction W is a direction extending between the bent ends of the coiled battery cell 20.

The tail section 243 of the separator 24 is not overlapped with a tail section 221 of the first electrode plate 22 in a thickness direction T of the coiled battery cell 20. The thickness direction T is perpendicular to the width direction W. The tail section 221 of the first electrode plate 22 is a section from the tail end of the first electrode plate 22 to the last bend of the first electrode plate 22. Accordingly, a tail section 261 of the second electrode plate 26 is a section from the tail end of the second electrode plate 26 to the last bend of the second electrode plate 26.

According to an embodiment of the present disclosure, in the thickness direction T, the tail section 221 of the first electrode plate 22 and the tail section 261 of the second electrode plate 26 are located on same side of the starting section 241 of the separator 24.

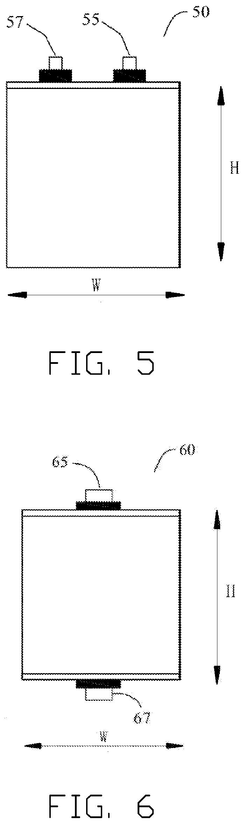

Referring to FIG. 5, a coiled battery cell 50 of an embodiment of the present disclosure shows that the first electrode tab 55 and the second electrode tab 57 are both located on the top of the coiled battery cell. In an embodiment (not shown), the first electrode tab 55 and the second electrode tab 57 may also be located on the bottom of the coiled battery cell. A height direction H of the coiled battery cell is perpendicular to the plane in which the width direction W and the thickness direction T are located. The top and bottom of the coiled battery cell are the two end faces of the coiled battery cell in the height direction H.

Referring to FIG. 6, a coiled battery cell 60 of an embodiment of the present disclosure shows that the first electrode tab 65 is located on the top of the coiled battery cell 60, and the second electrode tab 67 is located on the bottom of the coiled battery cell 60. In an embodiment (not shown), the first electrode tab 65 may be located on the bottom of the coiled battery cell 60, and the second electrode tab 67 may be located on the top of the coiled battery cell 60. In other words, the first electrode tab 65 and the second electrode tab 67 are located on different end faces (the top and the bottom of the coiled battery cell).

Referring to FIG. 2, in the present embodiment, in the thickness direction T of the coiled battery cell 20, the plurality of first electrode tabs 25 and the plurality of second electrode tabs 27 are located on the same side of the coiled battery cell 20, that is, all are located on the top or on the bottom of the coiled battery cell 20. The plurality of first electrode tabs 25 and the plurality of second electrode tabs 27 are located on the same side of the separator 24. In addition, on the side where the first plurality of electrode tabs 25 and the plurality of second electrode tabs 27are arranged, each of the first electrode plate and the second electrode plate has an electrode tab on each layer thereof. The plurality of first electrode tabs 25 and the plurality of second electrode tabs 27 are located on a side of the starting section 241 of the separator, the tail section 221 of the first electrode plate 22 and the tail section 261 of the second electrode plate being located on other side of the starting section 241 of the separator.

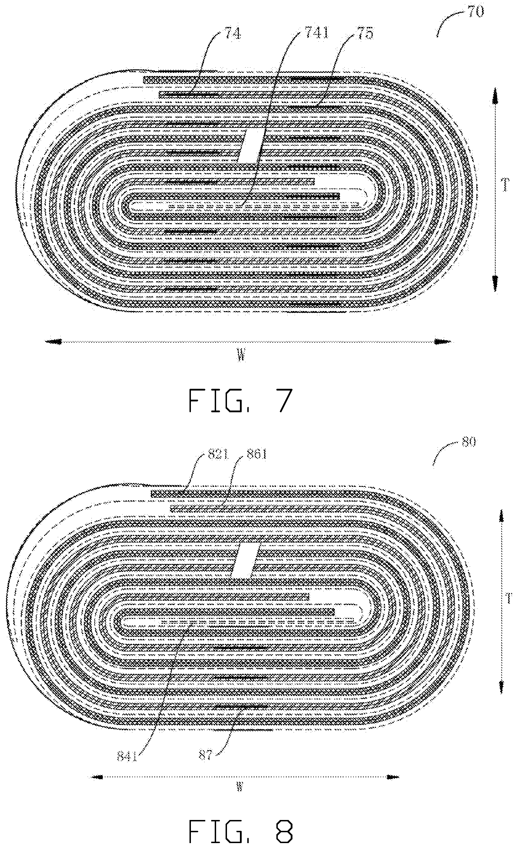

Referring to FIG. 7, a coiled battery cell 70 of an embodiment of the present disclosure shows that the plurality of first electrode tabs 75 and the plurality of second electrode tabs 77 are located on the same end face of the coiled battery cell 70. That is, the plurality of first electrode tabs 75 and the plurality of second electrode tabs 77 are located on the top of the coiled battery cell 70, or the first plurality of electrode tabs 75 and the plurality of second electrode tabs 77 are located on the bottom of the coiled battery cell 70. Different from the embodiment shown in FIG. 2, according to the application of the coiled battery cell of the present disclosure and overcurrent condition of the electrode tabs, in the thickness direction T of the coiled battery cell 70, the plurality of first electrode tabs 75 are disposed on two sides of the starting section 741 of the separator, and the plurality of second electrode tabs 77 are disposed on two sides of the starting section 741 of the separator. In addition, each layer of the first electrode plate located on both sides of the starting section 741 of the separator includes the first electrode tab 75, each layer of the second electrode plate located on both sides of the starting section 741 of the separator includes the second electrode tab 77.

Referring to FIG. 8, a coiled battery cell 80 of an embodiment of the present disclosure is shown, the plurality of first electrode tabs (not shown) and the plurality of second electrode tabs 87 are located on the top and the bottom of the coiled battery cell 80 respectively. In the thickness direction T of the coiled battery cell 80, the plurality of second electrode tabs 87 are all located on the same side of the starting section 841 of the separator. The plurality of the second electrode tabs 87 are all located on a side of the starting section 841 of the separator, the tail section 821 of the first electrode plate and the tail section 861 of the second electrode plate are located on other side of the starting section 841 of the separator.

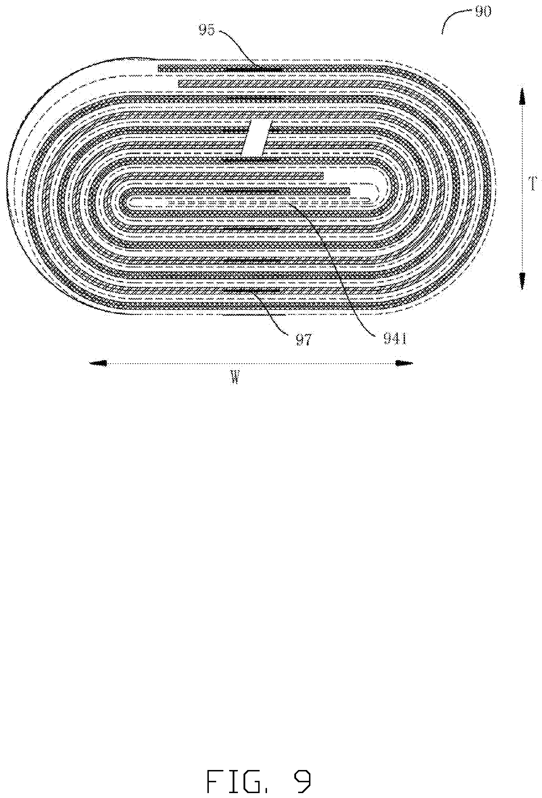

Referring to FIG. 9, a coiled battery cell 90 of an embodiment of the present disclosure is shown, in the embodiment, the first electrode tab 95 and the second electrode tab 97 are located on the top and bottom of the coiled battery cell 90 respectively. According to the application of the coiled battery cell of the present disclosure and the overcurrent condition of the electrode tabs, the plurality of first electrode tabs 95 and the plurality of second electrode tabs 97 are disposed on both sides of the starting section of the separator respectively, that is the plurality of first electrode tabs 95 are disposed on both sides of the starting section 941 of the separator and the plurality of second electrode tabs are disposed on both sides of the starting section 941 of the separator.

Although FIG. 2, and FIG. 7 to FIG. 9 show some exemplary embodiments of the manner of arrangement of the electrode tabs, it should be understood, the positioning of the electrode tabs in the wound electrode structure may be determined according to specific conditions of use, the present disclosure is not limited to the arrangements described above.

According to an embodiment of the present disclosure, a battery is also provided, the battery may be provided with any one of the above coiled battery cells and a packaging film which wraps the coiled battery cell.

The coiled battery cell and the battery of the present disclosure end with the separator, having a high friction force against a packaging foil, which may absorb some of the impact force when the coiled batty cell is dropped. Furthermore, both surfaces of the first electrode plate adjacent to the separator in the outermost circle are coated with active material layer, which has a higher strength than a single layer of aluminum foil, thereby reducing the risk of short circuit caused by tearing or breaking of the aluminum foil.

The embodiments shown and described above are only examples. Therefore, many commonly-known features and details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims. It will, therefore, be appreciated that the embodiments described above may be modified within the scope of the claims.

## Claims

1. A coiled battery cell comprising:
a first electrode plate comprising a first active material layer completely covering two surfaces of the first electrode plate;
wherein, an outermost circle of the coiled battery cell is a separator adjacent to the first electrode plate.

2. The coiled battery cell of claim 1, further comprising a second electrode plate comprising a second active material layer completely covering two surfaces of the second electrode plate.

3. The coiled battery cell of claim 2,further comprising a plurality of first electrode tabs protruding from the first electrode plate and a plurality of second electrode tabs protruding from the second electrode plate; and the separator comprising a starting section extending along a width direction of the coiled battery cell, a winding section extending from the starting section, and a tail section forming a separator tail.

4. The coiled battery cell of claim 3, wherein the tail section of the separator is not overlapped with a tail section of the first electrode plate in a thickness direction of the coiled battery cell.

5. The coiled battery cell of claim 3, wherein in a thickness direction of the coiled battery cell, a tail section of the first electrode plate and a tail section of the second electrode plate are located on a same side of the starting section.

6. The coiled battery cell of claim 3, wherein the plurality of first electrode tabs and the plurality of second electrode tabs are disposed on a top of the coiled battery cell; or the plurality of first electrode tabs and the plurality of second electrode tabs are disposed on a bottom of the coiled battery cell.

7. The coiled battery cell of claim 3, wherein the plurality of first electrode tabs are disposed on a top of the coiled battery cell, and the plurality of second electrode tabs are disposed on a bottom of the coiled battery cell; or the plurality of first electrode tabs are disposed on a bottom of the coiled battery cell, and the plurality of second electrode tabs are disposed on a top of the coiled battery cell.

8. The coiled battery cell of claim 3, wherein in a thickness direction of the coiled battery cell, the plurality of first electrode tabs and the plurality of second electrode tabs are located on same side of the starting section.

9. The coiled battery cell of claim 3, wherein in a thickness direction of the coiled battery cell, the plurality of first electrode tabs are located on both sides of the starting section, and the plurality of second electrode tabs are located on both sides of the starting section.

10. A battery comprising: a coiled battery cell of any one of claims 1-9 and a packaging film wrapping the coiled battery cell.
